# FASCICULE DE BREVET EUROPEEN

(11) **EP 3 548 380 B1**
(45) Date de publication et mention de la délivrance du brevet: **15.07.2020**
(21) Numéro de dépôt: 17816933.0
(22) Date de dépôt: 29.11.2017
(51) Int. Cl.: B64D 29/06, F02K 1/72

(54) **NACELLE DE TURBORÉACTEUR D'AÉRONEF, ENSEMBLE PROPULSIF ET AÉRONEF COMPORTANT UNE TELLE NACELLE**
FLUGZEUGSTRIEBWERKSGONDEL, ANTRIEBSANORDNUNG UND FLUGZEUG BEINHALTEND SOLCHE GONDEL
AIRCRAFT TURBOPROP NACELLE, PROPELLER ASSEMBLY AND AIRCRAFT COMPRISING SUCH A NACELLE

(30) Priorité: 30.11.2016 FR 1661712
(43) Date de publication de la demande: 09.10.2019
(73) Titulaire: Safran Nacelles, 76700 Gonfreville-l'Orcher (FR)
(72) Inventeur: HEAU, Alexis, 76700 Gonfreville L'Orcher (FR); VALLEROY, Laurent Georges, 76700 Gonfreville L'Orcher (FR); LANSONNEUR, Goulwen, 76700 Gonfreville L'Orcher (FR)
(74) Mandataire: Delorme, Nicolas
(86) Numéro de dépôt international: PCT/FR2017/053283
(87) Numéro de publication internationale: WO 2018/100288

(56) Documents cités:
- WO-A1-2016/116709
- US-A1- 2002 125 370
- US-A1- 2011 318 173

## Description

L'invention se rapporte à une nacelle de turboréacteur, à un ensemble propulsif équipé d'une telle nacelle, ainsi qu'à un aéronef pourvu d'un tel ensemble propulsif.

Un aéronef est généralement propulsé par plusieurs turboréacteurs logés chacun dans une nacelle, chaque nacelle abritant en outre un ensemble de dispositifs d'actionnement annexes liés à son fonctionnement et assurant diverses fonctions lorsque le turboréacteur est en fonctionnement ou à l'arrêt.

Les nacelles d'avions civils sont généralement destinées à abriter un turboréacteur double flux, apte à générer par l'intermédiaire des aubes de la soufflante en rotation un flux de gaz chauds (également dénommé flux primaire) et un flux d'air froid (également dénommé flux secondaire) qui circule à l'extérieur du turboréacteur, à travers un passage annulaire, également appelé veine, formé entre deux parois concentriques de la nacelle. Les flux primaire et secondaire sont éjectés du turboréacteur par l'arrière de la nacelle.
- une entrée d'air, située en amont du turboréacteur ;
- une section médiane, destinée à entourer un carter de soufflante du turboréacteur ;
- une section arrière, comportant une structure interne destinée à entourer le générateur de gaz, c'est-à-dire la chambre de combustion du turboréacteur, le compresseur haute pression et les étages de turbine (basse et haute pression), et une structure externe qui définit, avec la structure interne, la veine secondaire servant à canaliser le flux d'air froid, la section arrière pouvant embarquant des moyens d'inversion de poussée ;
- une tuyère d'éjection, dont la sortie est située en aval du turboréacteur.

Les moyens d'inversion de poussée permettent, lors de l'atterrissage d'un avion, d'améliorer la capacité de freinage de celui-ci en redirigeant vers l'avant une fraction majoritaire de la poussée engendrée par le turboréacteur. Dans cette phase, l'inverseur obstrue généralement la veine du flux froid et dirige ce dernier vers l'avant de la nacelle, engendrant de ce fait une contre-poussée qui vient s'ajouter au freinage des roues de l'avion. Les moyens mis en oeuvre pour réaliser cette réorientation du flux froid varient suivant le type d'inverseur. Une configuration courante est celle des inverseurs de poussée dits « à grilles ». Dans ce type d'inverseur de poussée, le capot externe de la section arrière est coulissant. La translation vers l'arrière de ce capot coulissant permet de découvrir des grilles d'inversion mettant en communication la veine de flux froid et l'extérieur de la nacelle. La translation du capot coulissant permet en outre de déployer des volets de blocage dans la veine de flux froid, en aval de la soufflante. Ainsi, par l'action combinée des volets de blocage et des grilles d'inversion, le flux froid est redirigé vers l'avant de la nacelle.

Comme évoqué plus haut, les moyens d'inversion de poussée sont logés dans la section arrière d'une nacelle. On connait principalement trois types de configuration structurelle pour la section arrière, à savoir les structures respectivement dites « en C » (également connue sous l'appellation anglaise « C-duct »), « en D » (ou « D-duct ») et en « O » (ou « O-duct »).

Dans une nacelle à structure en D, les structures interne et externe de la section arrière de la nacelle sont reliées l'une à l'autre par deux ilots de liaisons diamétralement opposés, généralement dénommés birfucations. Les bifurcations forment ainsi des structures traversant la veine secondaire, respectivement au niveau des positions dites « à douze heures » (bifurcation supérieure) et « à six heures » (bifurcation inférieure). On rappelle que les positions « à douze heures » et « à six heures » sont définies conventionnellement par analogie avec un cadran de montre, la nacelle étant en position de fonctionnement, c'est-à-dire sous aile. La position « à douze heures » se situe ainsi au niveau du mat d'accrochage de la nacelle, tandis que la position « à six heures » correspond à la position diamétralement opposée.

Le document US2002/0125370 divulgue deux exemples de réalisation, d'une part avec une structure intégrale de la section arrière et système de guidage «à douze heures» et d'autre part, avec un système de guidage «à six heures» mais une section arrière en deux parties.

Dans une nacelle à structure en O ou en C, la section arrière est configurée de telle sorte qu'une bifurcation inférieure (ou ilôt de liaison inférieur) n'est pas nécessaire. La structure fixe externe peut être ainsi reliée à la structure fixe interne par une seule birfucation, la birfucation supérieure située au niveau de la position « à douze heures ». Une telle configuration réprésente un grand gain d'efficacité pour l'ensemble propulsif puisque la veine de flux froid n'est plus obstruée dans sa partie inférieure comme c'est le cas pour les structures en D. De plus, les structures en O ou en C permettent également des gains significatifs en termes de masse.

Dans une structure en O ou en C, le capot coulissant, ou capot mobile, est en général monté sur des rails de guidage disposés de part et d'autre du pylône (ou mât) de suspension de l'ensemble propulsif. Ces rails de guidage peuvent être disposés directement sur le pylône, ou sur un élément intermédiaire solidaire du pylône lorsque l'ensemble propulsif est monté. Le capot mobile est généralement guidé et soutenu uniquement au niveau de ces rails de guidage, donc uniquement à proximité de la position « à douze heures ». Par ailleurs, dans une structure en O, le capot coulissant forme une structure d'un seul tenant.

Afin de répondre à diverses contraintes (telles qu'éviter la réingestion d'air par le moteur, éviter de diriger une fraction de la poussée vers le fuselage de l'aéronef, etc.), le profil des grilles assurant la redirection du flux froid n'est en général pas uniforme le long de la circonférence de l'ensemble de grilles. Il s'ensuit que les efforts transversaux liés à l'inversion de poussée subis par les grilles ne sont pas uniformément répartis. La somme de ces efforts transversaux est non nulle, ce qui génère une force transversale appliquée sur l'ensemble de grilles et donc sur l'ensemble propulsif. Cette force transversale génère un mouvement de balancier de l'ensemble propulsif. Cette répartition non uniforme génère également une déformation non uniforme de l'inverseur, qui s'ovalise lors des phases d'inversion de poussée. Ces déformations et mouvement indésirables sont des inconvénients particulièrement importants dans le cas de structures en O ou en C.

Une solution à ces inconvénients est connue de la demande WO 2016/116709. Cette solution consiste à prévoir un système de guidage complémentaire en position dite « à six heures », ce qui permet d'assurer une reprise des efforts transversaux en partie basse de la nacelle. Le système de guidage décrit dans la demande précitée est de type « court », c'est-à-dire que l'écart entre les points d'appui extrêmes de l'élément guidé reste relativement faible devant la longueur de guidage assurée par le rail de guidage. Une telle configuration a pour but d'assurer une reprise suffisante des efforts transversaux tout en limitant le risque d'hyperstatisme dans le guidage du capot mobile.

Toutefois, le dispositif décrit dans cette demande ne permet pas de reprendre correctement certains efforts, dont en particulier les moments autour de l'axe vertical et l'axe transversal de la nacelle, c'est-à-dire les moments autour des deux axes perpendiculaires à l'axe longitudinal de la nacelle. Or, ces efforts peuvent être particulièrement importants, notamment dans certains cas de fonctionnement dégradé du système d'inversion de poussée, et par exemple en cas de panne d'un des actionneurs du capot mobile ou en cas d'incident de type « rétention du verrou tertiaire ». Dans le premier cas, la panne d'un actionneur peut aboutir à ce que le capot mobile subisse des efforts très fortement dissymétriques lors des mouvements de déploiement et de rétraction. Dans ce cas, les moments autour de l'axe vertical de la nacelle subis par le système d'inversion de poussée seront particulièrement importants. Dans le deuxième cas, le verrou tertiaire (généralement connu sous l'acronyme anglais TLS pour « tertiary lock system »), qui est situé en position « à 12h00 », ne libère pas le capot mobile. Le capot mobile est ainsi retenu en position rétractée uniquement en partie haute de la nacelle, et se trouve donc en porte-à-faux vis-à-vis des efforts aérodynamiques qu'il subit. Dans ce deuxième cas, les moments autour de l'axe transversal de la nacelle subis par le système d'inversion de poussée seront particulièrement importants.

L'invention se propose de résoudre les inconvénients de l'état de la technique en permettant de reprendre correctement l'ensemble des efforts subis par le capot coulissant et les grilles d'inversion en partie basse de la nacelle.

A cet effet, l'invention se rapporte à une nacelle de turboréacteur d'aéronef, la nacelle comportant une section arrière sans bifurcation inférieure, la section arrière comportant un système d'inversion de poussée, le système d'inversion de poussée comportant un capot mobile, la nacelle comportant un système de guidage comportant une partie mobile et une partie fixe, la partie mobile étant solidaire en translation du capot mobile et coopérant avec la partie fixe, la partie fixe étant fixe par rapport à la nacelle, le système de guidage étant disposé à proximité de la position dite « à 6 heures », la longueur de la partie fixe du système de guidage étant supérieure ou égale à 50% de la longueur de la partie mobile.

Ainsi, en prévoyant un système de guidage tel que défini ci-dessus, on réalise un guidage à six heures de type « long », qui permet d'assurer une reprise de l'ensemble des efforts transversaux en partie basse de la nacelle, y compris des moments autour des axes transversal et vertical de la nacelle (respectivement les axes y et z sur les figures). Grâce à cette configuration, lorsque le système d'inversion de poussée est en position déployée, les déformations et mouvement parasites générés dans les nacelles de type « O-duct » ou « C-duct » sont fortement limités voire supprimés. Et lorsque le système d'inversion de poussée sera amené à connaitre des incidents tels qu'une panne d'actionneur ou un incident de type « rétention du verrou tertiaire », les moments autour des axes y, z orthogonaux à l'axe x longitudinal de la nacelle seront correctement repris, ce qui n'est pas le cas de la nacelle de la demande WO 2016/116709. En outre, le système de guidage conforme à l'invention s'intègre simplement dans la nacelle car la partie mobile du système de guidage est avantageusement insérée à la place d'une grille pleine, par exemple celle normalement positionnée à six heures (généralement dénommée « blank off »).

Dans une réalisation, la longueur de la partie fixe du système de guidage est supérieure ou égale à 80% de la longueur de la partie mobile.

Dans une réalisation, la partie fixe forme un rail coopérant avec la partie mobile, la partie mobile formant une glissière et comportant une cavité apte à recevoir la partie fixe.

Dans une réalisation, la partie fixe est solidaire d'un cadre périphérique destiné à être fixé au carter de soufflante d'un turboréacteur, et/ou destinée à être fixée directement au carter de soufflante.

Dans une réalisation, la partie fixe comporte au moins deux points de fixation.

Dans une réalisation, le système d'inversion de poussée comporte des grilles d'inversion, notamment des grilles d'inversion coulissantes.

Dans une réalisation, les grilles d'inversion sont coulissantes, une extrémité avant de la partie mobile étant solidaire d'un cadre périphérique avant solidaire des grilles d'inversion.

Dans une réalisation, quelle la partie mobile est disposée entre deux grilles d'inversion.

Dans une réalisation, la partie mobile est disposée à l'emplacement normalement occupé par une grille dite pleine.

Dans une réalisation, la partie mobile est solidaire du cadre périphérique avant.

Dans une réalisation, une extrémité arrière de la partie mobile est solidaire d'un cadre périphérique du capot mobile.

Dans une réalisation, la partie mobile est prolongée par une poutre solidaire du capot mobile.

L'invention concerne également un ensemble propulsif d'aéronef, comportant un turboréacteur à double flux, l'ensemble propulsif comportant une nacelle telle que définie ci-dessus.

L'invention se rapporte enfin à un aéronef comportant au moins un ensemble propulsif tel que défini ci-dessus, l'ensemble propulsif étant supporté par un pylône, l'aéronef comportant des rails de guidage du capot mobile de la nacelle, les rails de guidage étant fixés sur le pylône, ou sur une structure solidaire du pylône et/ou du turboréacteur.

La présente invention sera mieux comprise à la lecture de la description détaillée qui suit, faite en référence aux dessins annexés, parmi lesquels :
- les figures 1a et 1b, représentent une nacelle conforme à l'invention, respectivement en configuration « jet direct » et « jet inverse » ;
- les figures 2a et 2b représentent une vue partielle de la nacelle des figures 1a et 1b, montrant la section arrière avec le système d'inversion de poussée respectivement en position rétractée et déployée ;
- les figures 3a et 3b sont respectivement des vues de détail des figures 2a et 2b ;
- les figures 4a et 4b sont des vues partielles de la nacelle des figures 1a et 1b, le système d'inversion de poussée étant respectivement en position rétractée et déployée ;
- La figure 5 représente une vue partielle d'un turboréacteur conforme à l'invention, montrant un exemple de réalisation de la partie fixe du système de guidage, celle-ci étant fixée sur le carter de soufflante du turboréacteur.

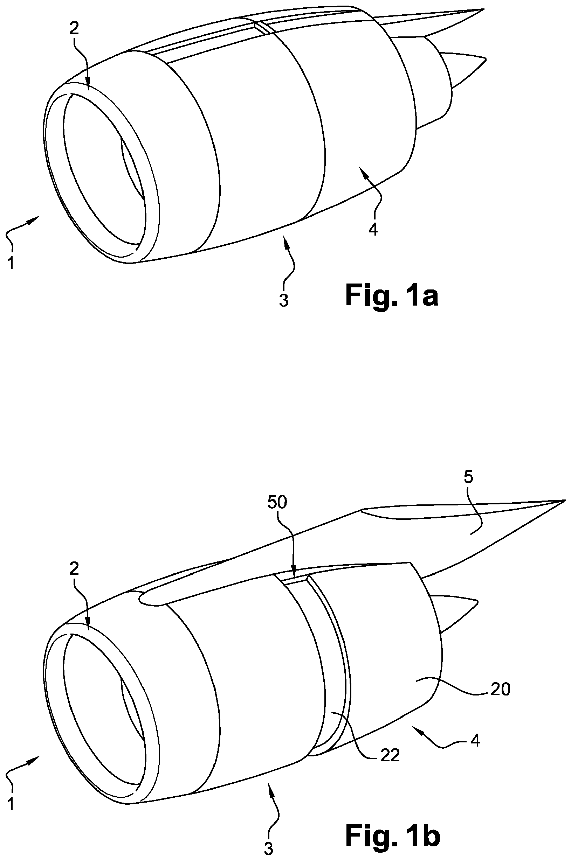

Les figure 1a et 1b montrent une vue d'une nacelle 1 conforme à l'invention. Celle-ci comporte de manière conventionnelle une entrée d'air 2, une section médiane 3, ainsi qu'une section arrière 4. Sur la figure 1a, la nacelle 1 est représentée seule, tandis que sur la figure 1b, on peut voir la nacelle 1 montée sur un pylône 5 (également connu sous le nom de « mât réacteur»). Par ailleurs, la figure 1a montre la nacelle en configuration « jet direct », c'est-à-dire avec le système d'inversion de poussée en position rétractée, tandis que la figure 1b montre la nacelle en configuration « jet inverse », c'est-à-dire avec le système d'inversion de poussée en position déployée. Ainsi, on peut voir sur la figure 1b qu'un capot mobile 20 de la section arrière 4 est en position reculée, laissant apparaitre un ensemble de grilles d'inversion 22. Dans l'exemple, le mouvement du capot mobile 20 est supporté et guidé par des rails 50 disposés de part et d'autre du pylône 5.

Dans l'exemple, la structure de la nacelle est de type « en O » (généralement connu sous l'appellation « O-duct ») et ne comporte donc pas de bifurcation (ou d'îlot de liaison) dans la partie inférieure de la veine de flux froid. Il est à noter que l'invention est également applicable à une nacelle à structure en C.

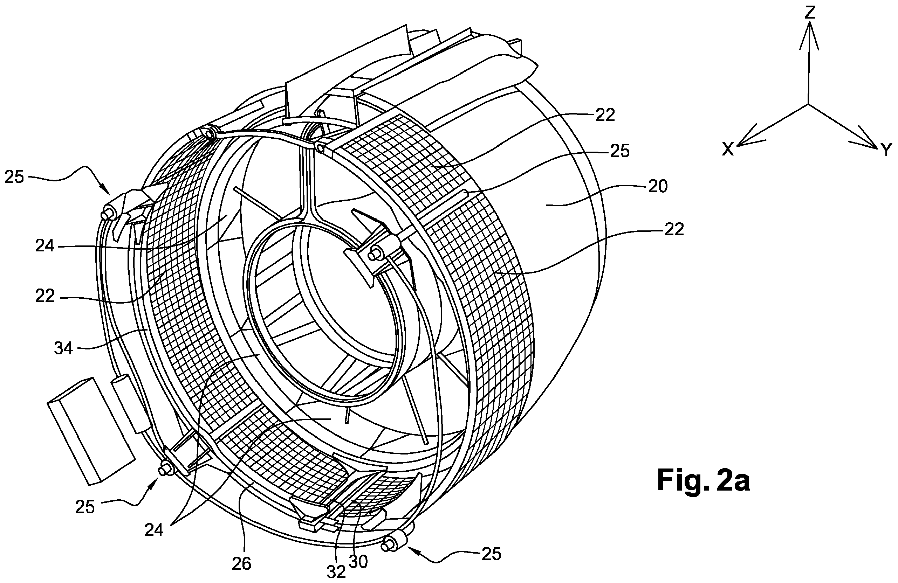

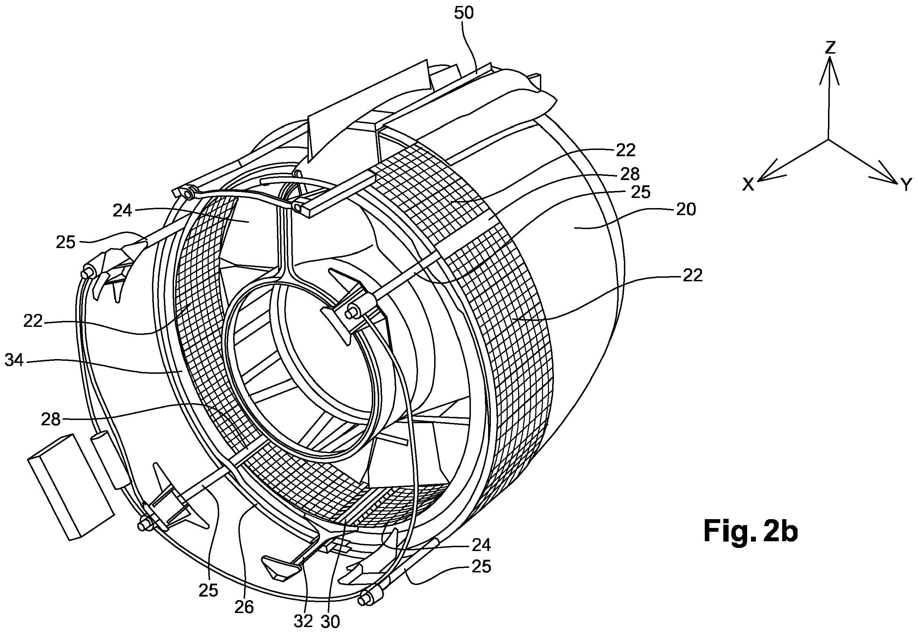

Les figures 2a et 2b représentent une partie de la section arrière de la nacelle des figures 1a et 1b, montrant en particulier les composants du système d'inversion de poussée, respectivement en position rétractée et en position déployée.

Le système d'inversion de poussée comprend un capot mobile 20, dans l'exemple d'un seul tenant, qui forme la surface extérieure de la section arrière de la nacelle. Le capot mobile 20 est monté coulissant, dans l'exemple par l'intermédiaire des rails 50, solidaires du pylône 5 supportant l'ensemble propulsif (soit l'ensemble formé par un turboréacteur et la nacelle associée). Le système d'inversion de poussée comprend en outre des grilles d'inversion 22, dans l'exemple des grilles coulissantes, et des volets de blocage 24 mobiles en rotation. Le système d'inversion de poussée comporte des actionneurs 25, notamment des actionneurs électromécaniques, permettant de faire coulisser le capot mobile entre sa position rétractée (figure 2a) et sa position déployée (figure 2b), et inversement.

Lorsque le système d'inversion de poussée est rétracté (figure 2a) :
- le capot mobile 20 est en position rétractée, correspondant à une position avancée dans laquelle il assure la continuité aérodynamique avec la section médiane de la nacelle ;
- les volets de blocage 24 sont en position rétractée, position dans laquelle ils n'obstruent pas la veine de flux froid ;
- les grilles d'inversion 22 sont en position rétractée (ou avancée), position dans laquelle elles sont disposées autour du carter de soufflante du turboréacteur.

Lorsque le système d'inversion de poussée est déployé (figure 2b) :
- le capot mobile est en position déployée, correspondant à une position reculée, dans laquelle il découvre les grilles d'inversion 22 qui sont dans leur position reculée ;
- les volets de blocage 24 sont en position déployée, position dans laquelle ils obstruent au moins partiellement la veine de flux froid ;
- les grilles d'inversion 22 sont en position déployée (ou reculée), position dans laquelle elles sont disposées en arrière du carter de soufflante du turboréacteur, et dans laquelle elles redirigent le flux froid vers l'extérieur et vers l'avant de la nacelle.

Il est à noter que les grilles d'inversion 22 étant dans l'exemple des grilles coulissantes, celles-ci sont liées en translation au capot mobile 20, et la position relative des grilles d'inversion 22 par rapport au capot mobile 20 ne varie pas lors du déploiement ou de la rétractation du système d'inversion de poussée.

Les grilles d'inversion 22 sont solidaires d'un cadre périphérique avant 26. Plusieurs logements 28 sont prévus pour les actionneurs du système d'inversion de poussée. Ces logements 28, au nombre de quatre dans l'exemple des figures, sont disposés entre certaines des grilles d'inversion 22.

En position « à six heures » (ou à proximité de cette position), est disposé un système de guidage, comportant une partie mobile 30, solidaire en translation du capot mobile 20, et une partie fixe 32, solidaire d'une partie fixe de la nacelle et/ou solidaire du turboréacteur associé à la nacelle.

Avantageusement, la partie mobile 30 est disposée à l'emplacement normalement occupé par une grille dite pleine (généralement connue sous l'appellation « blank off »), une telle grille pleine étant prévue pour éviter une redirection du flux froid vers le bas. Ainsi, la partie mobile 30 du système de guidage se trouve avantageusement disposée entre deux grilles d'inversion 22, en arrière du cadre périphérique avant 26 des grilles 22.

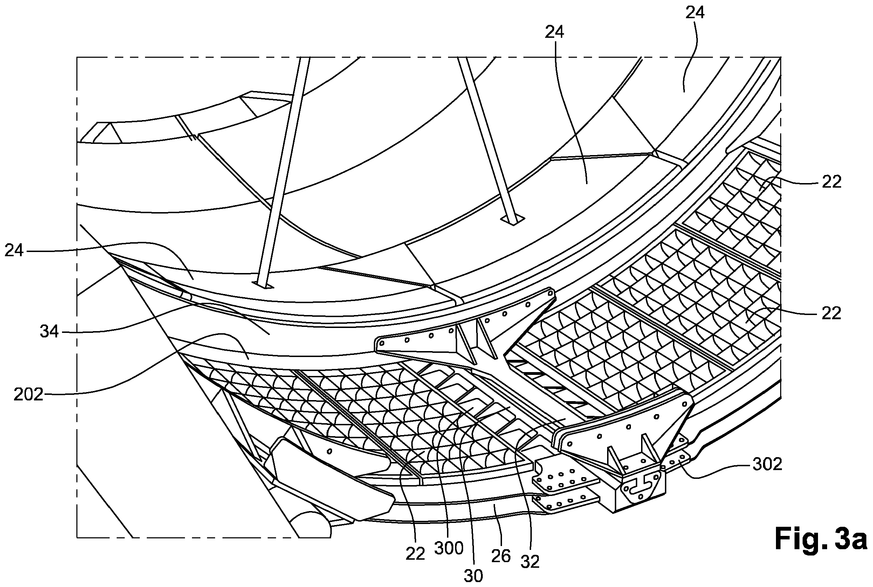

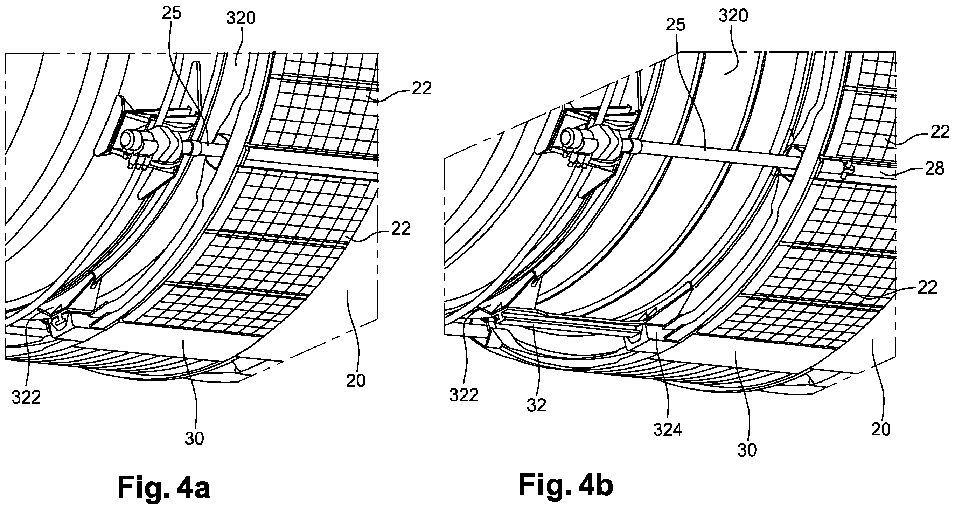

Conformément à l'invention, la partie mobile 30 du système de guidage est fixe par rapport au capot mobile 20 (et donc, dans l'exemple, par rapport aux grilles d'inversion 22), étant dans l'exemple fixée au cadre périphérique avant 26. La partie mobile 30 forme une glissière coopérant avec la partie fixe 32 qui forme un rail de guidage. La partie fixe 32 du système de guidage est fixe par rapport aux éléments non mobiles de la nacelle et de l'ensemble propulsif. Dans l'exemple, la partie fixe 32 est destinée à être fixée au carter de soufflante du turboréacteur associé à la nacelle. Comme montré sur les figures 2a et 2b, la position relative des parties fixe 32 et mobile 30 du système de guidage est liée à la position du capot mobile 20 et donc des grilles d'inversion 22. Cette position relative présente deux extrêmes, correspondant aux positions rétractée et déployée du système d'inversion de poussée. Ces deux positions extrêmes sont mieux visibles sur les figures 3a, 4a (inverseur de poussée rétracté) et 3b, 4b (inverseur de poussée déployé). Ces figures montrent que, conformément à l'invention, la longueur de la partie fixe 32 (ou rail) engagée (en position avancée du capot mobile 20) dans la partie mobile est supérieure ou égale à 50% (et de préférence supérieure ou égale à 60% et plus préférentiellement encore supérieure ou égale à 80%) de la longueur de la partie mobile 30 (ou glissière), permettant ainsi d'assurer un guidage de type long. Dans l'exemple, la longueur de la partie fixe 32 est égale à (ou proche de) la longueur de la partie mobile 30. Avantageusement, la longueur de la partie mobile 30 est supérieure à la course du capot mobile. Ainsi, lorsque le capot mobile est en position reculée, une portion de la partie fixe reste engagée dans la partie mobile. Dans ce cas, on pourra avantageusement limiter la longueur de la portion restant engagée en position reculée du capot mobile, celle-ci étant par exemple inférieure ou égale à 20% de la longueur de la partie mobile. On combinera ainsi les avantages d'un guidage « court » lorsque le capot mobile est en position reculée (position de jet inverse) avec les avantages d'un guidage « long » lorsque le capot mobile est en position avancée (position de jet direct).

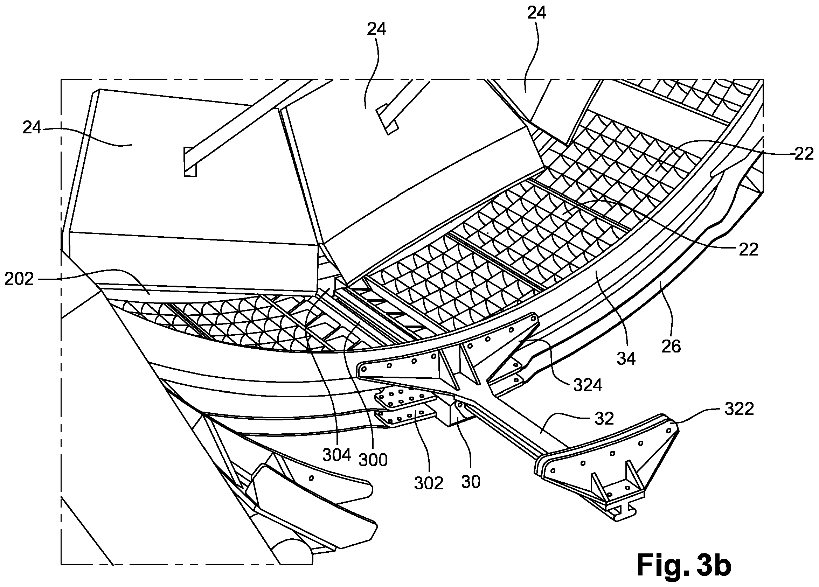

Comme visible notamment sur les figures 3a, 3b, et 4a, 4b, la partie mobile 30 du système de guidage comporte un corps 300 qui présente une partie avant 302, prévue pour être fixée au cadre périphérique avant 26, par exemple par éclissage, et une partie arrière 304, prévue pour être fixée au capot mobile 20, par exemple par rivetage et/ou éclissage. Dans l'exemple, la partie mobile 30 est solidaire d'un cadre périphérique 202 du capot mobile 20. Le système de guidage 30 comporte une cavité longitudinale conformée pour recevoir la partie fixe 32.

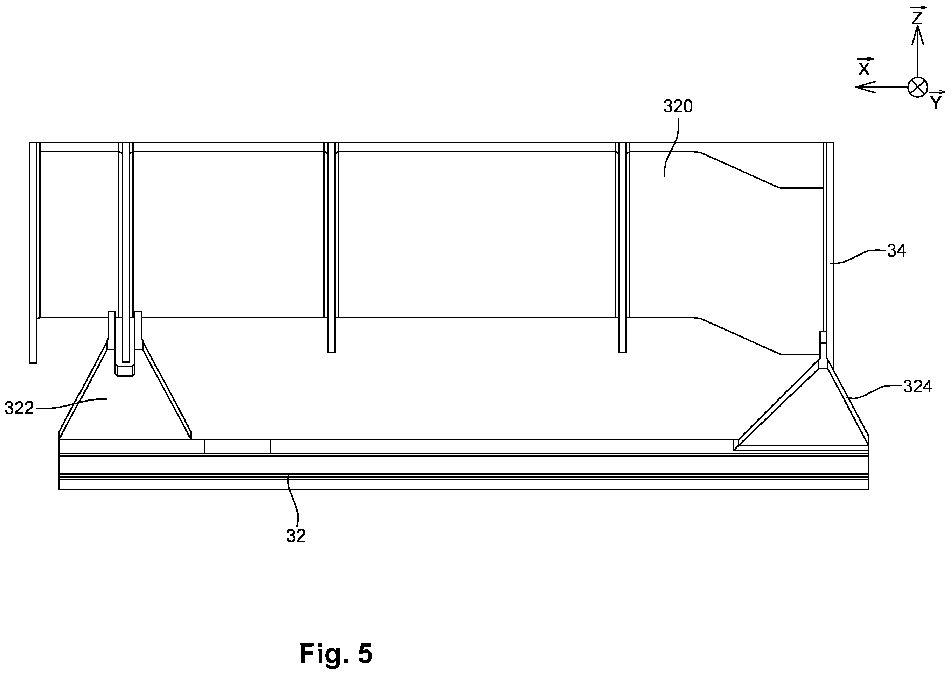

La figure 5 montre un exemple de fixation de la partie fixe 32 sur un carter de soufflante 320 de turboréacteur, l'ensemble étant vu de côté. Dans l'exemple, la partie fixe 32 comporte deux parties de fixation distantes. La première partie de fixation, ou partie de fixation avant 322, permet de fixer la partie fixe 32 directement au carter de soufflante 320, plus précisément à une bride de fixation du carter de soufflante. La deuxième partie de fixation, ou partie de fixation arrière 324, permet de fixer la partie fixe 32 à la virole de carter intermédiaire 34, elle-même fixée au carter de soufflante 320. Avantageusement, la partie de fixation arrière 324 sera réalisée d'un seul tenant avec la partie fixe 32, tandis que la partie de fixation avant 322 sera rapportée.

Dans une variante non représentée, la partie mobile du système de guidage pourra présenter, au niveau de sa partie arrière, une extension se prolongeant sous forme d'une poutre solidaire du capot mobile 20. Ainsi, par l'intermédiaire de cette extension, la partie mobile du système de guidage sera solidement fixée au capot mobile 20 et participera à la rigidité de celui-ci.

Dans une variante non représentée, on pourra prévoir que c'est la partie mobile du système de guidage qui forme un rail de guidage tandis que la partie fixe 32 forme une glissière coopérant avec le rail de guidage.

## Revendications

1. Nacelle de turboréacteur d'aéronef, la nacelle (1) comportant une section arrière (4) sans bifurcation inférieure, la section arrière comportant un système d'inversion de poussée, le système d'inversion de poussée comportant un capot mobile (20), la nacelle comportant un système de guidage comportant une partie mobile (30) et une partie fixe (32), la partie mobile (30) étant solidaire en translation du capot mobile (20) et coopérant avec la partie fixe (32), la partie fixe (32) étant fixe par rapport à la nacelle (1), **caractérisée en ce que** le système de guidage est disposé à proximité de la position dite « à 6 heures », la longueur de la partie fixe (32) du système de guidage étant supérieure ou égale à 50% de la longueur de la partie mobile (30).

2. Nacelle selon la revendication 1, dans laquelle la longueur de la partie fixe (32) du système de guidage est supérieure ou égale à 80% de la longueur de la partie mobile (30).

3. Nacelle selon la revendication 1 ou 2, dans laquelle la partie fixe (32) forme un rail coopérant avec la partie mobile (30), la partie mobile (30) formant une glissière et comportant une cavité apte à recevoir la partie fixe (32).

4. Nacelle selon l'une des revendications 1 à 3, dans laquelle la partie fixe (32) est solidaire d'un cadre périphérique (34) destiné à être fixé au carter de soufflante d'un turboréacteur, et/ou destinée à être fixée directement au carter de soufflante.

5. Nacelle selon la revendication précédente, dans laquelle la partie fixe (32) comporte au moins deux points de fixation.

6. Nacelle selon l'une des revendications précédentes, dans laquelle le système d'inversion de poussée comporte des grilles d'inversion, notamment des grilles d'inversion (22) coulissantes.

7. Nacelle selon la revendication 6, dans laquelle les grilles d'inversion (22) sont coulissantes, une extrémité avant (302) de la partie mobile (30) étant solidaire d'un cadre périphérique avant (26) solidaire des grilles d'inversion (22).

8. Nacelle selon l'une des revendications 6 ou 7, dans laquelle la partie mobile (30) est disposée entre deux grilles d'inversion (22).

9. Nacelle selon la revendication précédente, dans laquelle la partie mobile (30) est disposée à l'emplacement normalement occupé par une grille dite pleine.

10. Nacelle selon l'une des revendications 7 à 9, dans laquelle la partie mobile (30) est solidaire du cadre périphérique avant (26).

11. Nacelle selon l'une des revendications précédentes, dans laquelle une extrémité arrière (304) de la partie mobile (30) est solidaire d'un cadre périphérique (202) du capot mobile (20).

12. Nacelle selon l'une revendications précédentes, dans laquelle la partie mobile (30) est prolongée par une poutre solidaire du capot mobile (20).

13. Ensemble propulsif d'aéronef, comportant un turboréacteur à double flux, l'ensemble propulsif comportant une nacelle (1) conforme à l'une des revendications précédentes.

14. Ensemble propulsif selon la revendication précédente, dans lequel la partie fixe (32) est fixée à un carter de soufflante

15. Aéronef comportant au moins un ensemble propulsif conforme à la revendication 13 ou 14, l'ensemble propulsif étant supporté par un pylône (5), l'aéronef comportant des rails de guidage du capot mobile de la nacelle, les rails de guidage étant fixés sur le pylône (5), ou sur une structure solidaire du pylône et/ou du turboréacteur.

## Patentansprüche

1. Gondel eines Turbostrahltriebwerks eines Luftfahrzeugs, wobei die Gondel (1) einen hinteren Abschnitt (4) ohne untere Gabelung umfasst, wobei der hintere Abschnitt ein Schubumkehrsystem umfasst, wobei das Schubumkehrsystem eine bewegliche Abdeckung (20) umfasst, wobei die Gondel ein Führungssystem umfasst, das einen beweglichen Teil (30) und einen festsitzenden Teil (32) umfasst, wobei der bewegliche Teil (30) mit der beweglichen Abdeckung (20) translatorisch fest verbunden ist und mit dem festsitzenden Teil (32) zusammenwirkt, wobei der festsitzende Teil (32) in Bezug auf die Gondel (1) festsitzend ist, **dadurch gekennzeichnet, dass**
das Führungssystem in der Nähe der so genannten 6-Uhr-Position angeordnet ist, wobei die Länge des festsitzenden Teils (32) des Führungssystems größer oder gleich ist wie 50 % der Länge des beweglichen Teils (30).

2. Gondel nach Anspruch 1, wobei die Länge des festsitzenden Teils (32) des Führungssystems größer oder gleich ist wie 80 % der Länge des beweglichen Teils (30).

3. Gondel nach Anspruch 1 oder 2, wobei der festsitzende Teil (32) eine Schiene bildet, die mit dem beweglichen Teil (30) zusammenwirkt, wobei der bewegliche Teil (30) eine Gleitführung bildet und eine Aushöhlung umfasst, die geeignet ist, den festsitzenden Teil (32) aufzunehmen.

4. Gondel nach einem der Ansprüche 1 bis 3, wobei der festsitzende Teil (32) mit einem umlaufenden Rahmen (34) fest verbunden ist, der dazu bestimmt ist, an dem Gebläsegehäuse eines Turbostrahltriebwerks fixiert zu werden, und/oder dazu bestimmt ist, direkt an dem Gebläsegehäuse fixiert zu werden.

5. Gondel nach dem vorstehenden Anspruch, wobei der festsitzende Teil (32) mindestens zwei Befestigungspunkte umfasst.

6. Gondel nach einem der vorstehenden Ansprüche, wobei das Schubumkehrsystem Umkehrgitter umfasst, insbesondere verschiebbare Umkehrgitter (22).

7. Gondel nach Anspruch 6, wobei die Umkehrgitter (22) verschiebbar sind, wobei ein vorderes Ende (302) des beweglichen Teils (30) mit einem vorderen umlaufenden Rahmen (26) fest verbunden ist, der mit den Umkehrgittern (22) fest verbunden ist.

8. Gondel nach einem der Ansprüche 6 oder 7, wobei der bewegliche Teil (30) zwischen zwei Umkehrgittern (22) angeordnet ist.

9. Gondel nach dem vorstehenden Anspruch, wobei der bewegliche Teil (30) an der Stelle angeordnet ist, die normalerweise von einem so genannten Vollgitter eingenommen wird.

10. Gondel nach einem der Ansprüche 7 bis 9, wobei der bewegliche Teil (30) mit dem vorderen umlaufenden Rahmen (26) fest verbunden ist.

11. Gondel nach einem der vorstehenden Ansprüche, wobei ein hinteres Ende (304) des beweglichen Teils (30) mit einem umlaufenden Rahmen (202) der beweglichen Abdeckung (20) fest verbunden ist.

12. Gondel nach einem der vorstehenden Ansprüche, wobei der bewegliche Teil (30) von einem Balken verlängert wird, der mit der beweglichen Abdeckung (20) fest verbunden ist.

13. Antriebseinheit eines Luftfahrzeugs, die ein Doppelstrom-Turbostrahltriebwerk umfasst, wobei die Antriebseinheit eine Gondel (1) nach einem der vorstehenden Ansprüche umfasst.

14. Antriebseinheit nach dem vorstehenden Anspruch, wobei der festsitzende Teil (32) an einem Gebläsegehäuse fixiert ist.

15. Luftfahrzeug, das mindestens eine Antriebseinheit nach Anspruch 13 oder 14 umfasst, wobei die Antriebseinheit von einem Mast (5) gestützt wird, wobei das Luftfahrzeug Schienen zur Führung der beweglichen Abdeckung der Gondel umfasst, wobei die Führungsschienen auf dem Mast (5) fixiert sind oder auf einer Struktur, die mit dem Mast und/oder dem Turbostrahltriebwerk fest verbunden ist.

## Claims

1. A nacelle of an aircraft turbojet engine, the nacelle (1) including a rear section (4) without a lower bifurcation, the rear section including a thrust reverser system, the thrust reverser system including a movable cowl (20), the nacelle including a guidance system including a movable portion (30) and a fixed portion (32), the movable portion (30) being secured in translation to the movable cowl (20) and cooperating with the fixed portion (32), the fixed portion (32) being fixed with respect to the nacelle (1), **characterized in that** the guidance system is disposed close to the position called «at 6 o'clock», the length of the fixed portion (32) of the guidance system being greater than or equal to 50% of the length of the movable portion (30).

2. The nacelle according to claim 1, wherein the length of the fixed portion (32) of the guidance system is greater than or equal to 80% of the length of the movable portion (30).

3. The nacelle according to claim 1 or 2, wherein the fixed portion (32) forms a rail cooperating with the movable portion (30), the movable portion (30) forming a slide and including a cavity capable of receiving the fixed portion (32).

4. The nacelle according to any of claims 1 to 3, wherein the fixed portion (32) is secured to a peripheral frame (34) intended to be fixed to the fan casing of a turbojet engine, and/or intended to be directly fixed to the fan casing.

5. The nacelle according to the preceding claim, wherein the fixed portion (32) includes at least two fixing points.

6. The nacelle according to any of the preceding claims, wherein the thrust reverser system includes thrust reverser cascades, in particular sliding thrust reverser cascades (22).

7. The nacelle according to claim 6, wherein the thrust reverser cascades (22) are sliding, a front end (302) of the movable portion (30) being secured to a peripheral front frame (26) secured to the thrust reverser cascades (22).

8. The nacelle according to any of claims 6 or 7, wherein the movable portion (30) is disposed between two thrust reverser cascades (22).

9. The nacelle according to the preceding claim, wherein the movable portion (30) is disposed at the location normally occupied by a so-called full cascade.

10. The nacelle according to any of claims 7 to 9, wherein the movable portion (30) is secured to the peripheral front frame (26).

11. The nacelle according to any of the preceding claims, wherein a rear end (304) of the movable portion (30) is secured to a peripheral frame (202) of the movable cowl (20).

12. The nacelle according to any of the preceding claims, wherein the movable portion (30) is prolonged by a beam secured to the movable cowl (20).

13. An aircraft propulsion unit including a bypass turbojet engine, the propulsion unit including a nacelle (1) in accordance with any of the preceding claims.

14. The propulsion unit according to the preceding claim, wherein the fixed portion (32) is fixed to a fan casing.

15. An aircraft including at least one propulsion unit in accordance with claim 13 or 14, the propulsion unit being supported by a pylon (5), the aircraft including rails for guiding the movable cowl of the nacelle, the guide rails being fixed on the pylon (5), or on a structure secured to the pylon and/or the turbojet engine.
